Europäisches Patentamt

European Patent Office

Office européen des brevets

(11) Publication number: **0 268 716**
**A1**

## EUROPEAN PATENT APPLICATION

(21) Application number: 86309332.4

(22) Date of filing: 28.11.86

(51) Int. Cl.4: **F16F 1/36** , G10K 11/16

(43) Date of publication of application:
**01.06.88 Bulletin 88/22**

(84) Designated Contracting States:
**AT BE CH DE FR GB IT LI LU NL SE**

(71) Applicant: **Inabata Techno Loop Corporation
3-1-8, Shibuya, Shibuya-ku
Tokyo(JP)**

(72) Inventor: **Inabata, Tadao
203, 22-11, Nishiazabu 2-chome Minato-ku
Tokyo(JP)**

(74) Representative: **Deans, Michael John Percy et al
Lloyd Wise, Tregear & CO. Norman House
105-109 Strand
London WC2R OAE(GB)**

(54) Vibration damping device.

(57) A vibration damping device (2) is mounted on a source of vibration (I) so that vibration generated by the source is propagated to the damping device. A plurality of metallic filaments formed into a body (3) of predetermined shape in a manner whereby individual filaments remain capable of vibration within said body (3) so that vibration propagated to the damping device (2) is dissipated therein.

EP 0 268 716 A1

## VIBRATION DAMPING DEVICE

This invention relates to vibration damping devices.

Vibration damping devices are widely employed to suppress and to absorb unwanted vibration and noise. Conventional such devices are usually made of rubber or of plastics material and are mounted in a manner generally surrounding the vibration source. We have found that arrangements of this kind suffer from poor heat dissipation ability with the consequence that the apparatus which is proving the source of the noise or vibration and peripheral devices coupled thereto tend to overheat. So far as the present Applicants are aware, to the extent that vibration absorbers have been proposed heretofore to be made of a metallic absorbing material, they prove to be relatively poor in their ability to absorb noise and vibration and simultaneously to be relatively high in cost.

In accordance with the present invention, we provide a vibration damping device adapted to be mounted on a source of vibration so that vibration generated by said source is propagated to said damping device, characterised in that it comprises: a plurality of metallic filaments formed into a body of predetermined shape in a manner whereby individual filaments remain capable of vibration within said body so that vibration propagated to said damping device is dissipated therein.

Preferably the vibration damping device includes a holder adapted for resiliently holding the said body in a manner whereby individual filaments remain capable of vibration within the body.

By the term "metallic filament" as used herein, we intend to encompass, for example, not only metallic fibres and threads, but also metallic foil.

As we shall explain below, the metallic filaments may be formed into a body of predetermined shape in various ways.

The invention is hereinafter more particularly described by way of example only with reference to the accompanying drawings in which:-

Fig. I is a schematic longitudinal sectional view showing a motor on which an embodiment of vibration damping device according to the present invention is mounted;

Fig. 2 is a schematic fragmentary view showing portions of a serial printer on which an embodiment of vibration damping device according to the present invention is mounted;

Fig. 3 is a schematic fragmentary longitudinal sectional view of the printer shown in Fig. 2;

Fig. 4A and Fig. 4B are graphs respectively showing typical measurement results for sound pressure levels of a conventional serial printer, and a said printer equipped with the damping device, respectively;

Fig. 5 is a schematic transverse sectional view of another embodiment of vibration damping device according to the present invention; and

Fig. 6 is a schematic side view of the damping device of Fig. 5.

Fig. I shows a motor I, which would act as a vibration/noise source, and which has an outer peripheral surface on which a vibration damping device 2 is closely fitted so that vibration/noise is propagated into the damping device. This device comprises a body 3 formed of a plurality of metallic filaments which are compressed with a light pressure thereby to be formed into a body of predetermined shape, here annular. The filaments are here made of wavy aluminium fibres and provide a body which is low in density and high in thermal conductivity. The fibres are arranged in such a manner that friction can occur between adjacent ones of these fibres upon vibration thereof. The aluminium fibre is manufactured by extruding molten aluminium through an orifice of a die, for instance. Further, a holder or housing 4, and which serves as a further vibration absorber, made of a metallic material having a relatively large density, is closely fitted about the motor I and the body 3, so that vibration from the motor I is propagated to the housing 4 and heat is also transmitted thereto through the body 3. The housing is formed at its outer periphery with a plurality of radiation fins 5 for dissipating the thus transmitted heat to the exterior.

When vibration occurs with the rotation of the motor I, the generated vibration is propagated to the vibration damping device 2 disposed close to the motor, and hence aluminium fibres within the body 3 vibrate, friction occurring between adjacent fibres. Due to this vibration and friction, a considerable part of the vibration energy generated with the rotation of the motor I is dissipated. Since the body 3 is low in density, vibration components over a wide frequency range, in particular, over a range more than 3,000 Hz, are absorbed. Further, the remaining portion of vibration generated with rotation of the motor I is propagated to the housing 4, and, in particular, low frequency components thereof less than 3,000 Hz are damped down by mass effect of the housing made of metallic material having a relatively large density.

At the same time, heat generated with the rotation of the motor I is transmitted to the housing through the body 3 which is high in thermal conductivity, and is then radiated to the exterior from the radiation fins 5 formed on the housing 4, so as to prevent the motor device from becoming overheated.

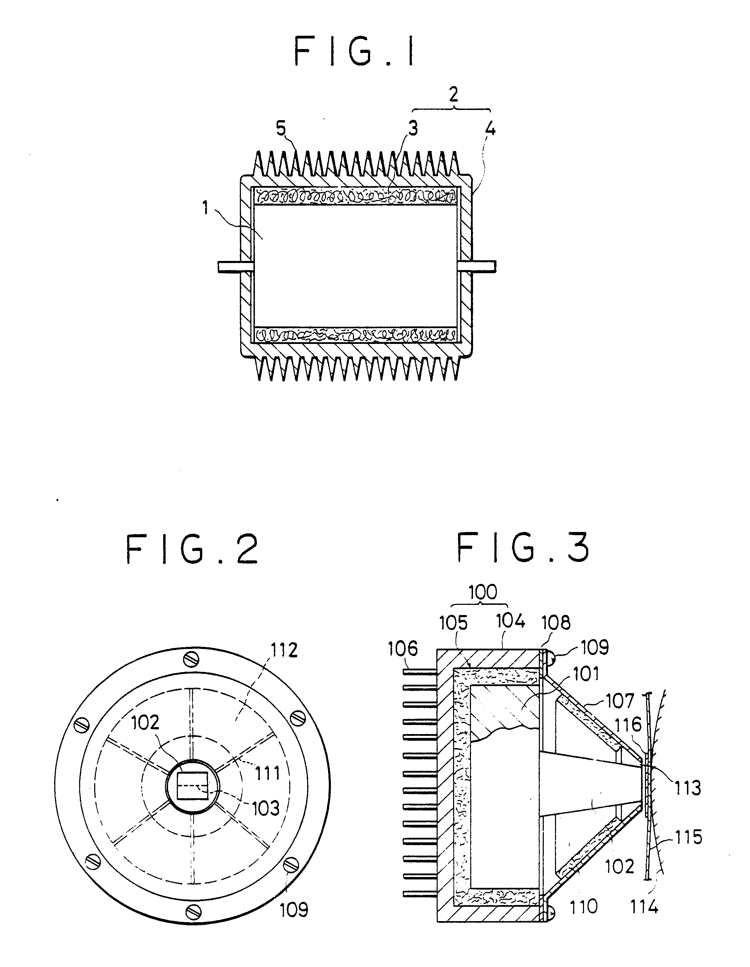

Figs. 2 and 3 show parts of a printer equipped with a second embodiment of vibration damping device according to the present invention, the printer being a 24-dot serial printer for printing both Chinese characters and ANK characters, for instance. The printer comprises a printer head main body portion 101 and a printer head nose portion 102 for guiding dot wires 103 for reciprocal motion thereof. Closely fitted on an outer peripheral surface and an end surface of the printer head body 101 is a first vibration damping device 100 consisting of a body 105 of metallic filaments, and an enclosure 104 having a high thermal conductivity. More specifically, the body 105 consists of a plurality of metallic filaments such as metallic fibres which are formed into a predetermined shape (here, generally into a dish-like shape), with the fibres remaining capable of vibration in the body and preferably such that friction can occur between adjacent ones of the fibres upon vibration thereof. The enclosure 104 serves as a holder for resiliently holding the body 104 in position in such a manner that the fibres remain capable of vibrating within the body. For instance, the body 105 is formed by compressing with light pressure a plurality of fibres each having a diameter of 150 microns and made of an Al - 4.5% Cu - 1.5% Mg alloy which is low in density, so as to form the fibres into a single body of the predetermined shape and then by causing the body to be impregnated in the respective gap spaces defined between the fibres with soft polyurethane, preferably over the whole body, the soft polyurethane having a hardness less than 50° (JIS K 6301), which forms the holding portion.

Radiation fins 106 are formed on an end wall of the enclosure 104 which has an annular wall having an end surface to which a conical cover 107 is fixed through vibration proof washers 108 by screws 109, the cover having an outer open end which cooperates with a tip end of the printer head nose portion 102 to define therebetween entrances 113 communicated to resonance cavity portions 110. Fixed on an inner peripheral surface of the cover 107 is a second vibration damping device 112 which is formed into a conical shape and is constructed in the same manner as the body 105 of the first vibration damping device. Further, a space defined by the cover 107, the printer head body 101 and the printer head nose 102 is separated by cavity walls 111 to form the resonance cavity portions 110. These walls 111 are disposed in biased contact at their outer ends with the inner periphery of the damping device 112, so as to reinforce the cover 107. Alter-

natively, the walls may be fixed at the outer ends to the cover, and in this case, the damping device 112 consists of a plurality of segments. Furthermore, a platen 114, a printing sheet 115 and a carbon ribbon 116 are disposed opposite the printer head nose portion 102.

Although the fibres themselves constituting the bodies of the vibration damping devices 100, 112 theoretically could be permanently deformed, these fibres are embedded in and resiliently held by the holding portion made of polyurethane and filled between the fibres. Thus, these absorbing portions withstand well external force applied by an operator when the body 105 of the first damping device 100 is interposed between the printer head body 101 and the enclosure 104 and when the second damping device 112 is affixed to the cover 107. As a result, the fibres are not deformed, and their vibration/noise absorption ability is not deteriorated.

Upon generation of vibration at the printer head body 101 and the nose portion 102 with printing operation of the printer, the thus generated vibration is propagated to the body 105 disposed close to the main body portion 101, and hence a number of the aluminium alloy fibres vibrate, preferably, along with occurrence of friction between the fibres, to dissipate a considerable part of the vibration energy which is generated with printing operation of the printer, which energy is further absorbed by the holding portion made of soft polyurethane. Since the body 105 has a low density, it absorbs various vibration components over a wide range of frequency, in particular, high frequency components higher than 3,000 Hz, particularly, 5,000 - 6,000 Hz. Further, remaining vibration components are propagated to the enclosure 104 through the body 105, to be damped down, particularly in the case of lower frequency components lower than 3,000 Hz, by the mass effect of the enclosure 104 having a relatively large density.

Furthermore, during the printing operation, impact sound of particular frequencies, which is generated when one or more dot wires 103 collide against the printing sheet 115 through the carbon ribbon 116, is absorbed by the resonance cavity portions 110 and then by the vibration damping device 112 mounted on the cover 107 and having the same damping function as that of the body 105.

At the same time, heat generated from the printer head body 101 and the printer head nose 102 is transmitted to the enclosure 104 through the body 105 which is high in thermal conductivity, and is then dissipated to the outside from the enclosure 104 and the radiation fins 106 formed thereon so as to avoid an excessive increase in the printer temperature.

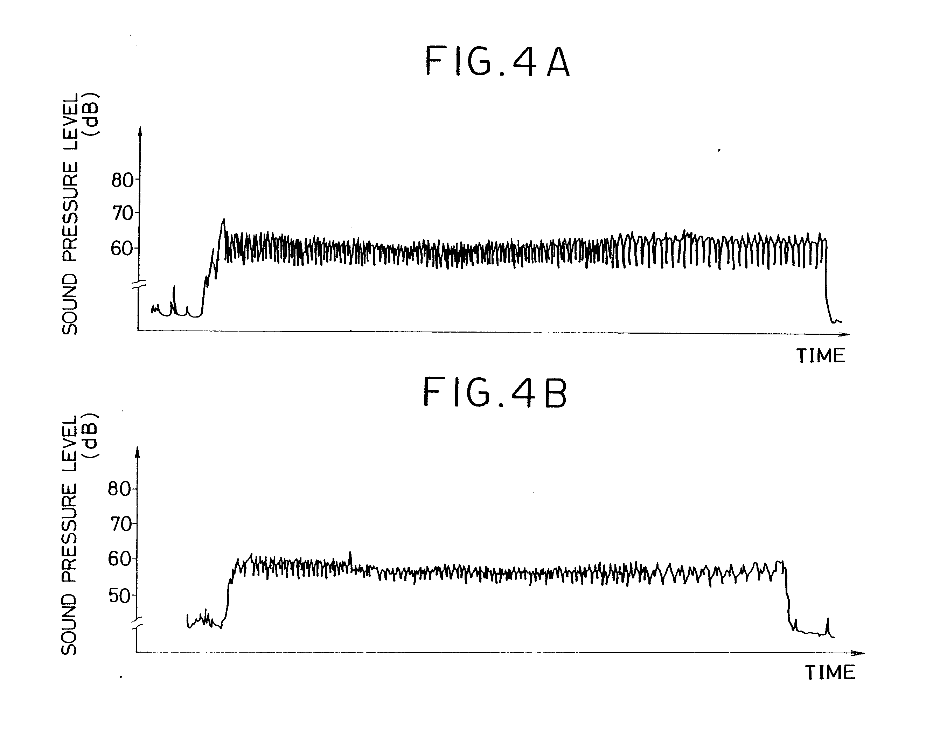

Fig. 4 shows a typical measurement result (Fig.4B) of sound pressure level for the printer equipped with a vibration damping device according to the present embodiment in comparison of that (Fig. 4A) for an otherwise identical conventional printer without the damping device. In Fig. 4, portions where a variation in sound pressure level occurs at short intervals are indicative of ANK characters being printed, whereas other portions including long variation period in level are indicative of printing of Chinese characters. The sound level in the conventional printer. has its peak value of approximately 65 dB, while the peak level where the damping device is employed is approximately 60 dB, and thus it can be understood that provision of the vibration damping device achieves a significant reduction of approximately 5 dB in sound pressure level.

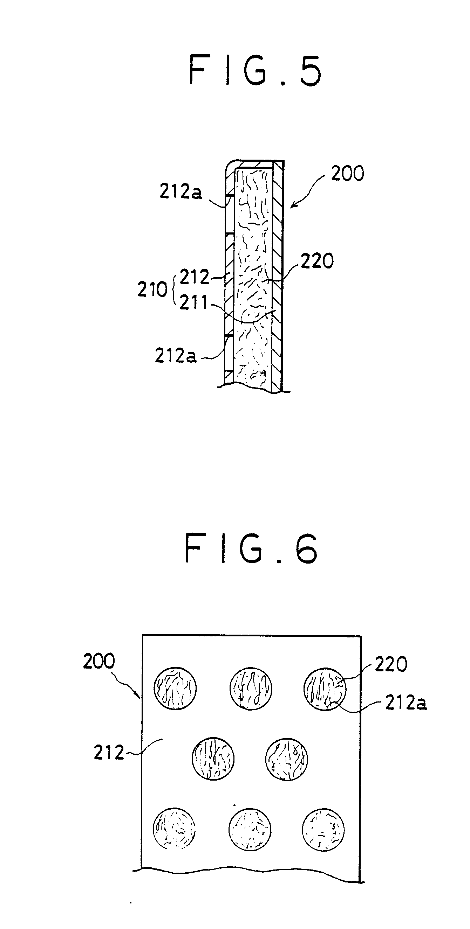

Figs. 5 and 6 show a third embodiment of vibration damping device according to the present invention which is adapted to be mounted on various vibration sources. The vibration damping device 200 comprises a case member 210 made of an aluminium alloy, a zinc alloy, etc., and a vibration absorbing sheet 220 filled in the case member, which sheet is obtained by forming a plurality of metallic filaments such as aluminium fibres into a body of predetermined shape, i.e., a sheet having thickness of 2 millimetres, by the use of pressure rollers, with the fibres remaining capable of vibrating within the sheet, and then by causing the thus obtained sheet of fibres to be impregnated at gap spaces between the fibres with a soft resin such as acrylic resin, urethane resin, etc. In order to improve vibration damping ability, it is preferable to make the density of the sheet large, preferably, the sheet has a weight more than 1,000 g/m² in case that the sheet has its thickness of 2 millimetres.

Preferably, the case member 210 consists of an outer case member 211 made of a vibration damping alloy such as Al-Zn alloy having a relatively high rigidity enough to seal therein vibration energy, and an inner case member 212 which is arranged on the side close of the device adapted to be mounted to a vibration source (not shown), and is formed with a number of apertures 212a for efficient propagation of vibration from the vibration source to the fibres constituting the absorbing sheet 220. Preferably, in order to improve the vibration absorbing function of the vibration absorbing sheet 220, the sheet is inserted into the case member 210 in such a manner that the metallic fibres constituting the sheet always bias the inner and outer case members apart. The apertures formed on the inner case member 212 may be shaped into an arbitrary shape such as a rectangular shape so that, as a whole, the inner case member 212 may be formed into a lattice shape; although here the member 212 is formed with circular apertures 212a.

Instead of the damping device 2 in the first embodiment, having plain fibres formed into a body by slight compression, a device of the kind described with reference to Figs. 2 to 6 may be employed, there the fibres are held by a holding portion, so that the damping device is handled with ease when it is mounted on the vibration source.

In the foregoing aluminium fibres have been disclosed as being used in the first and third embodiments, fibres of Al - 4.5% Cu - 1.5% Mg alloy impregnated with soft polyurethane being employed in the second embodiment. However, the vibration damping device of the present invention is not limited to these kinds of filaments. For instance, the metallic filaments may be made of Al-Zn alloy, Al-Si-Cu alloy, or Al-Zn-Mg-Cu alloy, for example. By changing the constituents of the filament in this manner, the frequency range of vibration components of the propagated vibration from the vibration source, which are to be mainly damped down, can be selected. The above-listed preferred fibre materials have density less than 5g/cm³ and thermal conductivity higher than 0.3 cal/cm/sec/°C. Also, the housing or holder is made of a material having thermal conductivity of the same order as that of the body of filaments.

Further, metallic foil may be employed instead of fibre.

Furthermore, the body of filaments may be constructed by forming a number of metallic filaments such as aluminium fibres into one piece, and then impregnating the whole with soft plastic or soft rubber such as polyvinyl chloride, silicon rubber, chloroprene rubber, or foam plastic or foam rubber of these kinds, to produce a body of predetermined shape.

The filament body may be formed into various shapes, as for example and as illustrated herein, into shapes adapted to be mounted on the motor and printer, respectively.

## Claims

1. A vibration damping device adapted to be mounted on a source of vibration so that vibration generated by said source is propagated to said damping device, characterised in that it comprises: a plurality of metallic filaments formed into a body of predetermined shape in a manner whereby individual filaments remain capable of vibration within said body so that vibration propagated to said damping device is dissipated therein.

2. A vibration damping device according to Claim 1, further characterised in that the filaments are arranged in said body such that friction occurs between adjacent ones of said filaments when said filaments vibrate.

3. A vibration damping device according to Claims 1 or 2, further characterised in that said body is low in density and in that it is adapted predominantly to dissipate therein higher frequency components of the vibration propagated from said source.

4. A vibration damping device according to any preceding Claim, further characterised in that said vibration damping device is adapted to be mounted on said source so that heat generated by said source is transmitted to said damping device, and in that said filaments are high in thermal conductivity.

5. A vibration damping device according to any preceding Claim, further characterised in that it comprises a holder adapted for resiliently holding said body in a manner whereby individual filaments remain capable of vibration within said body.

6. A vibration damping device according to Claim 5, further characterised in that said holder is formed by a soft resilient material having a hardness less than 50°.

7. A vibration damping device according to any preceding Claim, further characterised in that a vibration absorbing means is disposed to one side of said body away from said source in such a manner that vibration generated from said source is propagated to said vibration absorbing means through said body, said vibration absorbing means being formed of a material which is relatively larger in density than said body, and is adapted to dissipate relatively lower frequency components of the said vibration propagated through said body.

8. A vibration damping device according to any of Claims 1 to 6, further characterised in that a vibration absorbing means is disposed to one side of said body away from said source in such a manner that heat generated from said source is transmitted to said vibration absorbing means through said body, said vibration absorbing means being formed of a metallic material which is high in thermal conductivity.

9. A vibration damping device according to Claim 8, further characterised in that said vibration absorbing means is formed at one side thereof remote from said body with a plurality of radiation fins for dissipating heat transmitted from said source through said body to the outside.

10. A vibration damping means according to any preceding Claim, further characterised in that said device is adapted to be mounted on a vibration source in the form of a motor, said device being formed in a generally annular configuration and being adapted to be fitted on an outer peripheral surface of said motor.

11. An electric motor with a vibration damping device according to Claim 10 fitted to its outer peripheral surface.

12. A printer head for a printer, having a printer head main body portion and a printer head nose portion for guiding dot wires of the printer for reciprocal motion thereof, the printer being characterised in having a vibration damping device according to any of Claims 1 to 9 disposed on an outer surface of said printer head main body portion.

13. A printer comprising a printer head according to Claim 12, further characterised in that said printer has a cover surrounding said printer head nose portion, a said vibration damping device being mounted on an inner periphery of said cover.

# FIG.1

5 2 3 4 1

# FIG.2

112
102
111
103
109

# FIG.3

100
105 104 108
106 109
101
107
116
113
115
102
110 114

FIG.4A

FIG.4B

# FIG.5

212a

200

212

210 { 212

211

220

212a

# FIG.6

200

220

212a

212

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 514 458  (THORN et al.)  * Whole document * | 1-4,8, 10 | F 16 F    1/36  G 10 K   11/16 |
| X | PATENT ABSTRACTS OF JAPAN, vol. 6, no. 50 (M-120)[928], 3rd April 1982; & JP-A-56 164 241 (CHUO HATSUJIYOU K.K.) 17-12-1981  * Abstract * | 1-4,8 | |
| X | DE-A-1 021 654  (LICENTIA PATENT-VERWALTUNGS-GmbH)  * Column 1, lines 41-44 * | 1,2,4 | |
| A | | 7,10, 11 | |
| | * Claims 1-3 * | | TECHNICAL FIELDS SEARCHED (Int. Cl.4) |
| X | GB-A-1 263 467  (DARCHEM ENGINEERING LTD.)  * Claims 1-3; figure 1 * | 1,2 | F 16 F  G 10 K  B 41 J  H 02 K |
| X | GB-A-2 074 289  (BARRY WRIGHT CORP.)  * Whole document * | 1-5 | |
| A | DE-A-1 958 354  (ROLLS-ROYCE LTD.)  * Claim 6; figure 5 * | 1 | |
| | --- -/- | | |

The present search report has been drawn up for all claims

| Place of search | Date of completion of the search | Examiner |
|---|---|---|
| THE HAGUE | 27-07-1987 | SINGER G.M. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 10, no. 25 (M-450)[2082], 31st January 1986; & JP-A-60 183 166 (CANON K.K.) 18-09-1985 | 12,13 | |
| | ----- | | |

**TECHNICAL FIELDS SEARCHED (Int. Cl.4)**

The present search report has been drawn up for all claims

| Place of search | Date of completion of the search | Examiner |
|---|---|---|
| THE HAGUE | 27-07-1987 | SINGER G.M. |